# EUROPEAN PATENT APPLICATION

(11) **EP 3 493 108 A1**
(43) Date of publication of application: **05.06.2019**
(21) Application number: 18203153.4
(22) Date of filing: 29.10.2018
(51) Int. Cl.: G06K 9/00, B60W 30/12

(54) **LANE MAINTAINING METHOD AND APPARATUS**

(30) Priority: 30.11.2017 KR 20170162927
(71) Applicant: Samsung Electronics Co., Ltd., Gyeonggi-do 16677 (KR)
(72) Inventor: KOO, Jahoo, 16678 Gyeonggi-do (KR); LEE, Dongwook, 16678 Gyeonggi-do (KR); LEE, Jaewoo, 16678 Gyeonggi-do (KR); JI, Dae Hyun, 16678 Gyeonggi-do (KR)
(74) Representative: Grootscholten, Johannes A.M.

(57) **Abstract**

Disclosed is a lane maintaining method and apparatus, the method includes determining a presence of a tunnel in front of a vehicle, detecting a first lighting pattern in the tunnel from a first front view image acquired from the vehicle before the vehicle enters the tunnel in response the tunnel being present, determining reference information on a current driving lane of the vehicle based on the first lighting pattern, detecting a second lighting pattern in the tunnel from a second front view image acquired after the vehicle enters the tunnel, and determining whether the vehicle departs from the current driving lane based on the second lighting pattern and the reference information.

## Description

### Field

The following description relates to technology for maintaining a lane.

### Background

In automatic or autonomous driving, various driving operations are automatically performed. For example, an autonomously driving host vehicle may travel on a road without a driver taking actions, such as, turning a steering wheel, actuating an accelerator pedal, or a brake pedal. Various technologies for the autonomous driving use information collected from surrounding images that are obtained by a vehicle. In order to carry out the autonomous driving safely, accurate recognition of lane-marking is needed and the recognized lane-markings are used to maintain a current lane base.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, there is provided a lane maintaining method including determining a presence of a tunnel in front of a vehicle, detecting a first lighting pattern in the tunnel from a first front view image acquired before the vehicle enters the tunnel, in response to the tunnel being present, determining reference information on a current driving lane of the vehicle based on the first lighting pattern, detecting a second lighting pattern in the tunnel from a second front view image acquired after the vehicle enters the tunnel, and determining whether the vehicle departs from the current driving lane based on the second lighting pattern and the reference information.

The determining of the reference information may include determining angle information regarding a positional relationship between the first lighting pattern and the current driving lane to be the reference information.

The determining of the angle information may include determining an angle formed in rotating the first lighting pattern about a vanishing point estimated in the first front view image such that at least a portion of the first lighting pattern is located at a center of the current driving lane.

The determining of whether the vehicle departs from the current driving lane may include rotating the second lighting pattern based on the angle information, and determining whether the vehicle departs from the current driving lane based on a positional relationship between a center of the current driving lane and a location of the rotated second lighting pattern.

The determining of whether the vehicle departs from the current driving lane may include converting the rotated second lighting pattern into a top view image, and determining whether the vehicle departs from the current driving lane based on the second lighting pattern represented in the top view image.

The lane maintaining method may include controlling a steering of the vehicle, in response to a determination that the vehicle departs from the current driving lane.

The determining of the reference information may include detecting a lane-marking of the current driving lane from the first front view image, and determining information on a positional relationship between the detected first lighting pattern and the detected lane-marking to be the reference information,.

The determining of the presence of the tunnel may include determining that the tunnel is present, in response to the tunnel being recognized in a front view image acquired from the vehicle.

The determining of the presence of the tunnel may include determining that the tunnel is present, in response to a lighting arranged in the tunnel being recognized in a front view image acquired from the vehicle.

The determining of the presence of the tunnel may include determining whether the tunnel is present based on a location of the vehicle measured using a global positioning system (GPS) sensor and map information indicating a location of the tunnel.

The first lighting pattern and the second lighting pattern are acquired from the vehicle.

In another general aspect, there is provided a method for maintaining a lane including detecting a first lighting pattern from a first front view image acquired from a vehicle at a first time, determining reference information on a current driving lane of the vehicle based on the first lighting pattern, detecting a second lighting pattern from a second front view image acquired from the vehicle at a second time, and determining whether the vehicle departs from the current driving lane based on the second lighting pattern and the reference information.

The determining of the reference information may include determining angle information regarding a positional relationship between the first lighting pattern and the current driving lane to be the reference information.

The determining of the angle information may include determining an angle used to rotate the first lighting pattern about a vanishing point estimated in the first front view image such that at least a portion of the first lighting pattern is located at a center of the current driving lane.

The first lighting pattern and the second lighting pattern may be patterns of lightings in a tunnel.

The first lighting pattern and the second lighting pattern may be patterns of streetlamps located on a side of a road on which the vehicle is travelling.

In another general aspect, there is provided a lane maintaining apparatus including a camera configured to capture a front view image from a vehicle, and a processor is configured to detect a first lighting pattern from a first front view image acquired from the vehicle at a first time, determine reference information on the current driving lane of the vehicle based on the first lighting pattern, detect a second lighting pattern from a second front view image acquired from the vehicle at a second time, and determine whether the vehicle departs from the current driving lane based on the second lighting pattern and the reference information.

The processor may be configured to determine angle information regarding a positional relationship between the first lighting pattern and the current driving lane to be the reference information.

The processor may be configured to determine an angle used to rotate the first lighting pattern about an vanishing point estimated in the first front view image such that at least a portion of the first lighting pattern is located at a center of the current driving lane.

The processor may be configured to determine a presence of a tunnel based on any one or any combination of map information indicating a location of the tunnel and a location of the vehicle, or the first front view image, and detect, as the first lighting pattern, a pattern of a lighting in the tunnel from the first front view image, in response to determining that the tunnel is present.

The first lighting pattern and the second lighting pattern may be patterns of lightings in a tunnel.

The first lighting pattern and the second lighting pattern may be patterns of streetlamps located on a side of a road on which the vehicle is travelling.

In another general aspect, there is provided a method for maintaining a lane including detecting a first lighting pattern from a first front view image acquired at a first time, determining reference information on a current driving lane of the vehicle based on the first lighting pattern, detecting a second lighting pattern from a second front view image acquired from the vehicle at a second time, detecting lane markings from the second front view image, determining whether the lane markings from the second front view image are valid, and determining a position of the vehicle in the current driving lane based on the second lighting pattern and the reference information, in response to the lane markings not being valid.

The lane maintaining method may include determining the position of the vehicle in the current driving lane based on the lane markings, in response to the lane markings being valid.

The determining of whether the lane markings are valid may include any one or any combination of the luminance level around the vehicle being below a first threshold, an image quality of the second front view image being below a second threshold, and a continuity of the lane markings being lower than a third threshold.

The reference information may include positional relationship between the first lighting pattern and first lane markings detected from the first front view image.

The positional relationship may include any one or any combination of a difference in height on a vertical axis between the first lighting pattern and the first lane markings, a difference in distance on a distance axis between the first lighting pattern and the first lane markings, a ratio between the difference in the height and the difference in the distance, and a conversion matrix corresponding to relationship between a location of the first lighting pattern and a location of the first lane markings.

In another general aspect, there is provided a lane guidance apparatus including a first sensor configured to capture an image in front of the vehicle, a head-up display (HUD), a processor configured to detect a first lighting pattern from a first front view image acquired from the vehicle at a first time, determine reference information on the current driving lane of the vehicle based on the detected first lighting pattern, detect a second lighting pattern from a second front view image acquired from the vehicle at a second time, and determine whether the vehicle departs from the current driving lane based on the detected second lighting pattern and the reference information, and control a steering of the vehicle or output a notification on the HUD, in response to the vehicle departing from the current driving lane.

The guidance apparatus may include a second sensor configured to provide a location of the vehicle, and a memory configured to store map information, wherein the processor is further configured to determine a presence of landmarks proximal to the current driving lane based on the location of the vehicle and the map information.

Other features and aspects will be apparent from the following detailed description, the drawings, and the claims.

### Brief Description of the Drawings

FIG. 1A illustrates an example of a front view image captured from a vehicle in a tunnel.
FIG. 1B illustrates an example of a front view image captured from a vehicle in a vicinity of a tunnel entrance.
FIG. 2 illustrates an example of a method for maintaining a lane, which is performed in a tunnel.
FIG. 3 illustrates an example of a method for maintaining a lane, which is performed in a tunnel.
FIG. 4 illustrates an example of detecting a first lighting pattern from a first front view image.
FIG. 5 illustrates an example of a process of determining reference information on a current driving lane based on a first lighting pattern.
FIGS. 6 through 7B illustrate examples of a process of determining whether a vehicle departs from a current driving lane based on reference information and a second lighting pattern.
FIG. 8 illustrates an example of a process of determining reference information on a current driving lane based on a first lighting pattern.
FIGS. 9 and 10 illustrate examples of a process of determining whether a vehicle departs from a current driving lane based on reference information and a second lighting pattern.
FIG. 11 illustrates an example of a method for maintaining a lane.
FIGS. 12 and 13 illustrate examples of a method for maintaining a lane that is performed in a night driving environment.
FIG. 14 illustrates an example of an apparatus for maintaining a lane.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### Detailed Description

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween.

The terminology used herein is for describing various examples only, and is not to be used to limit the disclosure. The articles "a," "an," and "the" are intended to include the plural forms as well, unless the context clearly indicates otherwise.

In the following description, the examples described herein may be used to generate information to support a driver or to control an autonomous vehicle. The examples described herein may also be used to interpret visual information in a device, such as, for example, an intelligent system installed for fully autonomous driving or driving assistance in a vehicle, and used to assist safe and comfortable driving suitable for surroundings that include, for example, a traffic situation, inadequate light conditions, or road configuration. The examples described herein may be applicable to vehicles and vehicle management systems such as, for example, an autonomous vehicle, an automatic or autonomous driving system, an intelligent vehicle, an advanced driver assistance system (ADAS), a navigation system to assist a vehicle with safely maintaining a lane on which the vehicle is travelling, a smartphone, or a mobile device.

In the following description, a "road" is a thoroughfare, route, or connection, between two places that has been improved to allow travel by foot or some form of conveyance, such as a vehicle. A road can include various types of roads such as, for example, highways, national roads, farm roads, local roads, or high-speed national roads. A road may include a single lane or a plurality of lanes. Lanes correspond to road spaces that are distinguished from each other by road lines marked on a surface of a road. In an example, a "lane" is a space of a plane on which a vehicle is traveling among a plurality of lanes, *i*.*e*., as a space occupied and used by the vehicle. One lane is distinguished from the other lanes by right and left markings of the lane.

In an example, the vehicle described herein refers to any mode of transportation, delivery, or communication such as, for example, an automobile, a truck, a tractor, a scooter, a motorcycle, a cycle, an amphibious vehicle, a snowmobile, a boat, a public transit vehicle, a bus, a monorail, a train, a tram, an autonomous or automated driving vehicle, an intelligent vehicle, a self-driving vehicle, an unmanned aerial vehicle, an electric vehicle (EV), a hybrid vehicle, a smart mobility, or a drone. In an example, smart mobility may include mobility devices such as, for example, electric wheels, an electric kickboard, and an electric bike. In an example, vehicles include motorized and non-motorized vehicles, for example, a vehicle with a power engine (for example, a cultivator or a motorcycle), a bicycle or a handcart.

In autonomous driving system and ADAS, a vehicle is controlled during travel based on a lane-marking or a lane that is recognized through an image analysis. Thus, for autonomous driving system and ADAS, accurately recognition of lane-markings and preventing unintended change of a driving lane is important for the safety of a vehicle's occupants and for safe driving of the vehicle. In general, lane recognition is performed based on a front view image acquired by capturing a front view from a vehicle. A lane is detected from the front view image and a current driving lane is determined based on the detected lane. When the front view image is acquired in a dark environment, a lane may be harder to recognize or be unrecognizable. In poor visibility conditions, even when the lane is recognizable, a reliability of lane detection may be relatively low.

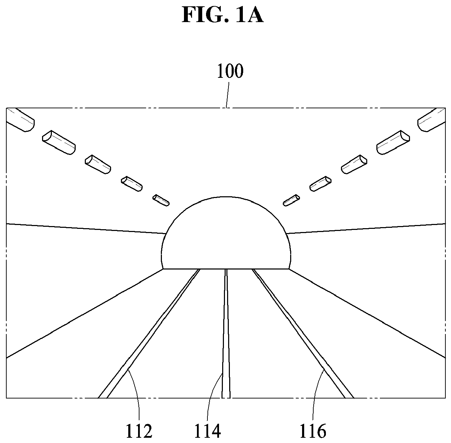

When a vehicle travels in a tunnel, a front view image 100 is acquired as illustrated in FIG. 1A. Due to a dark environment inside a tunnel, lane boundaries 112, 114, and 116 are not clearly represented in the front view image 100 in which an inside of the tunnel is captured, so that a lane recognition based on the front view image 100 may fail. When the vehicle enters the tunnel, a lane-marking may not appear clearly in a front view image due to a difference in luminance between the inside and outside of the tunnel. Also, lane-marking may not exist on a road in the tunnel.

In an example, the lane-marking may not be very clear in a front view image captured from the vehicle in a dark environment, such as, for example, a night driving situation outside the tunnel, so that a lane may not be accurately detected. When the lane-marking is not recognized or incorrectly recognized, a driving lane is incorrectly estimated, which may pose a serious threat to safety. Accordingly, it is important to accurately recognize a lane and a lane-marking in dark environments, such as, for example, a tunnel and night driving situation.

A lane maintaining apparatus and method described hereinafter enables an accurate determination of a lane-marking and a driving lane, even in dark environments. In an example, the lane maintaining apparatus assists a vehicle in maintaining a current driving lane based on a front view image acquired from the vehicle by a camera. In another example, the lane maintaining apparatus prevents the vehicle from departing from the current driving lane without a user's intention to change the current driving lane. Also, when the vehicle departs or is about to depart the current driving lane, the lane maintaining apparatus provides notification on a risk of a lane departure to a user.

The lane maintaining apparatus detects a lane-marking from the front view image captured from the vehicle and performs a lane maintaining function based on the detected lane-marking. In an example, when the vehicle travels in the dark environment, such as the tunnel and the night driving situation, the lane maintaining apparatus uses a lighting pattern represented in the front view image in addition to a lane-marking detected from the front view image, thereby, robustly performing the lane maintaining function.

The lane maintaining apparatus accurately estimates the lane-marking and the current driving lane in the tunnel including, for example, an underground tunnel based on location of lightings installed in the tunnel. Because an overall luminance is relatively low in the tunnel, lane-marking detection is difficult. In contrast, a luminance of the lightings arranged in the tunnel is relatively high and thus, the lightings are easily detected from the front view image. In an example, a pattern of arrangement of the lightings in the tunnel is used as a source to estimate the current driving lane, instead of the lane-marking. In general, the lightings are arranged at a height and intervals and also arranged based on a pattern that is similar or identical to a shape of the lane-marking. Using such characteristics of the lightings, the lane maintaining apparatus accurately recognizes a location of the lane-marking and the current driving lane based on the lighting pattern in a dark environment, such as the inside of a tunnel. Also, the lane maintaining apparatus estimates a future road shape based on the lighting pattern in the tunnel. When it is estimated that a future road is curved based on the lighting pattern, the lane maintaining apparatus may enhance a driving safety through an automatic speed reducing control.

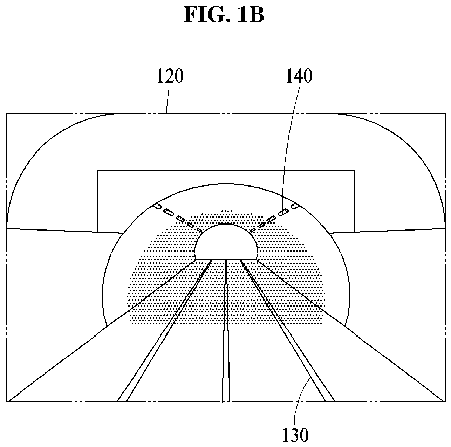

In an example, to perform the lane maintaining function based on the location of the lightings in the tunnel, a positional relationship between the lighting pattern and the current driving lane or a boundary of the current driving lane is determined before the vehicle enters the tunnel. FIG. 1B illustrates a front view image 120 captured from a vehicle in a vicinity of a tunnel entrance. The lane maintaining apparatus detects a lighting 140 installed in a tunnel from the front view image 120 and determines reference information to define a positional relationship between the detected lighting 140 and a current driving lane or a lane-marking 130.

When the vehicle enters the tunnel, the lane maintaining apparatus detects lightings from a front view image acquired in the tunnel and determines whether the vehicle is maintained in a driving lane and a location of a lane-marking from a location of the lightings based on reference information determined at a previous time. Even then the lane-marking is not accurately detected in the tunnel, the lane maintaining apparatus effectively performs the lane maintaining function based on information associated with the lightings in the tunnel. For example, the lane maintaining apparatus determines whether the vehicle travels in the tunnel in a lane in which the vehicle has travelling before entering the tunnel, based on the lighting pattern in the tunnel in addition to a result of detecting the lane-marking. Also, the lane maintaining apparatus assist the vehicle to continue driving in the lane in which the vehicle has traveled after entering the tunnel.

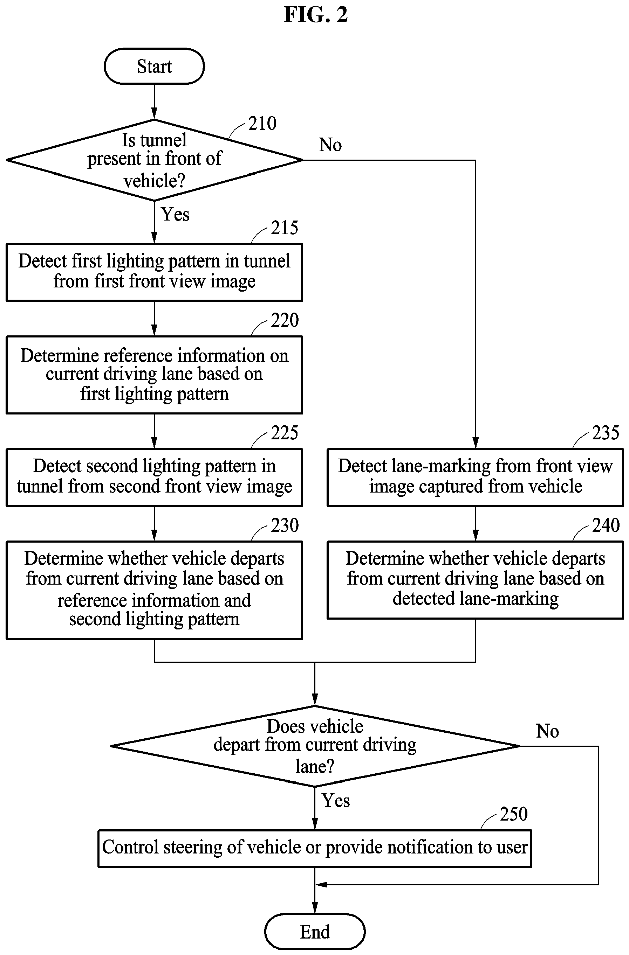

FIG. 2 illustrates an example of a method for maintaining a lane, which is performed in a tunnel. The operations in FIG. 2 may be performed in the sequence and manner as shown, although the order of some operations may be changed or some of the operations omitted without departing from the scope of the illustrative examples described. Many of the operations shown in FIG. 2 may be performed in parallel or concurrently. One or more blocks of FIG. 2, and combinations of the blocks, can be implemented by special purpose hardware-based computer that perform the specified functions, or combinations of special purpose hardware and computer instructions. In addition to the description of FIG. 2 below, the descriptions of FIGS. 1A-1B are also applicable to FIG. 2. Thus, the above description may not be repeated here.

Referring to FIG. 2, a lane maintaining apparatus performs a lane maintaining function appropriately for each of a road in a tunnel and a road outside the tunnel. The lane maintaining apparatus performs the lane maintaining function on the road based on a lane-marking detected from a front view image acquired from a vehicle and performs the lane maintaining function in the tunnel based on information on an arrangement of lightings in the tunnel in addition to a result of detection of lane-marking.

In operation 210, a lane maintaining apparatus determines whether a tunnel is present in front of a vehicle. When an object corresponding to the tunnel or an object corresponding to lightings arranged in the tunnel is recognized, the lane maintaining apparatus determines that the tunnel is present in front of the vehicle. The front view image is acquired by capturing a front view from the vehicle by a camera included in the vehicle. The front view image used herein may be a color image. However, other types of front view image, such as, for example, a grayscale image and an infrared image, may be used without departing from the scope of the illustrative examples described. In another example, the front view image may be wirelessly provided to the lane maintaining apparatus from a sensor or server located outside the vehicle. The lane maintaining apparatus receives the front view image from the camera and determines whether the tunnel or a tunnel entrance is present based on the front view image using a trained recognizer. The recognizer is, for example, a neural network trained to detect a presence or an absence of the tunnel from an image that is input to the recognizer based on a number of learning images.

In an example, the lane maintaining apparatus determines whether the tunnel is present in front of the vehicle based on map information indicating a location of the tunnel and information on a location of the vehicle measured using a global positioning system (GPS) sensor. The lane maintaining apparatus estimates whether the vehicle is to arrive at the tunnel entrance based on a route obtained based on location information of the vehicle and map information in which a location of the tunnel is stored. An accuracy of recognizing the presence of a tunnel is enhanced when the presence of the tunnel is determined based on the map information and the location information of the vehicle in addition to the front view image captured from the vehicle.

In operation 215, when it is determined that in that the tunnel is present in front of the vehicle, the lane maintaining apparatus detects a first lighting pattern in the tunnel from a first front view image acquired from the vehicle before the vehicle enters the tunnel. The first lighting pattern is, for example, a positional distribution of lightings in the tunnel detected from the first front view image.

In an example, the first front view image captured before the vehicle enters the tunnel represents the tunnel entrance and lightings arranged in the tunnel. The lane maintaining apparatus detects the first lighting pattern from the first front view image using a detector based on, for example, a neural network or an edge detection. Also, the lane maintaining apparatus detects pixels having brightness values greater than a threshold among pixels included in the first front view image, and detects, among the detected pixels, pixels arranged adjacent to one another to form a pattern as the first lighting pattern.

In operation 220, the lane maintaining apparatus determines reference information on a current driving lane of the vehicle based on the detected first lighting pattern. The reference information is, for example, information that defines a relationship between the first lighting pattern detected from the first front view image and a lane on which the vehicle is travelling when the first front view image is captured.

In an example, the lane maintaining apparatus determines angle information that defines a positional relationship between the first lighting pattern and the current driving lane to be the reference information. The lane maintaining apparatus determines, to be the reference information, angle information used to rotate the first lighting pattern about a vanishing point estimated in the first front view image such that at least a portion of the first lighting pattern is located at a center of the current driving lane or parallel with a driving direction of the vehicle.

In another example, the lane maintaining apparatus detects a lane-marking of the current driving lane from the first front view image and determines the reference information from positional relationship information of the first lighting pattern and the current driving lane based on the detected lane-marking. The positional relationship information is information that defines relationships between a position of the detected lane-marking and positions of lightings in the tunnel. The first front view image includes the lightings and the lane-marking, starting from a vicinity of the tunnel entrance to an inside of the tunnel. The lane maintaining apparatus detects the first lighting pattern of the lightings arranged in the tunnel and the lane-marking on a road near the tunnel entrance from the first front view image and determines positional relationship information of the detected lane-marking and the first lighting pattern. For example, the lane maintaining apparatus determines, to be the reference information, parameters used for defining a positional relationship between a lane-marking and a lighting located on the same vertical plane in the tunnel.

Since locations and arrangement of lightings vary for each tunnel, unique reference information is determined each time that the vehicle enters a tunnel. The lane maintaining apparatus detects a first lighting pattern in each tunnel from a first front view image captured from a vehicle before the vehicle enters the corresponding tunnel and determines reference information on a current driving lane based on the detected first lighting pattern.

In operation 225, the lane maintaining apparatus detects a second lighting pattern in the tunnel from a second front view image captured from the vehicle after the vehicle enters the tunnel. For example, the lane maintaining apparatus detects the second lighting pattern from the second front view image based on the same scheme as used to detect the first lighting pattern. The second lighting pattern represents a positional distribution of lightings in the tunnel detected from the second front view image.

In operation 230, the lane maintaining apparatus determines whether the vehicle departs from the current driving lane based on the reference information and the second lighting pattern. A lane departure includes a case where a portion of the vehicle has departed from a lane and a case where the vehicle is in danger of departing from the lane. The lane maintaining apparatus applies the reference information to a detected position of the second lighting pattern and analyzes a result of the applying to determine whether or not the vehicle has left the current driving lane.

In an example, when the reference information is the angle information that defines the positional relationship between the first lighting pattern and the current driving lane, the lane maintaining apparatus rotates the second lighting pattern based on the angle information and converts the rotated second lighting pattern into a top view image. The lane maintaining apparatus determines whether the vehicle departs from the current driving lane based on a location of the second lighting pattern represented in the top view image.

In an example, when the reference information is the positional relationship information of the first lighting pattern and the current driving lane that is determined based on the lane-marking, the lane maintaining apparatus estimates a location of the lane-marking in the tunnel from the location of the second lighting pattern based on the positional relationship information. The positional relationship information defines a positional relationship between a lane-marking and a location of lightings in a tunnel. Thus, when the location of the lightings is acquired, the location of the lane-marking in the tunnel is estimated based on the positional relationship information. The lane maintaining apparatus estimates whether the vehicle departs from the current driving lane based on the estimated location of the lane-marking.

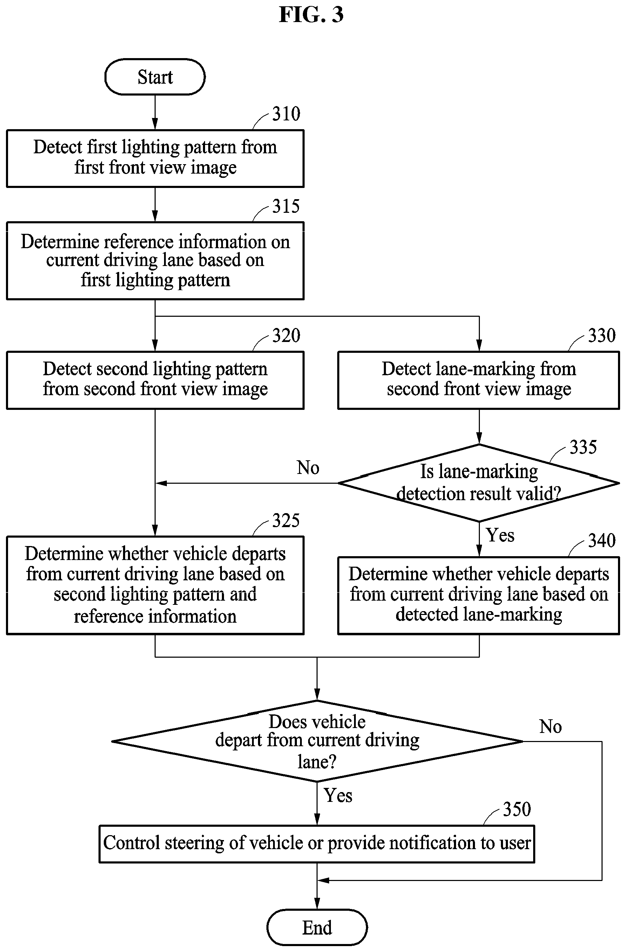

In an example, the lane maintaining apparatus detects the lane-marking from the second front view image to more accurately determine whether the vehicle has departed from the current driving lane based on a result of the detecting and the second lighting pattern in the tunnel. Further description will be provided with reference to FIG. 3.

When it is determined that the tunnel is absent in front of the vehicle in operation 210, in operation 235, the lane maintaining apparatus detects a lane-marking from a front view image captured from the vehicle using at least one of various lane detection algorithms for recognizing a lane-marking on a road. The lane maintaining apparatus detects the lane-marking from the front view image using image information, such as, for example, a brightness value and/or a color value of the front view image or a recognizer based on a neural network trained to detect a lane-marking from an image. However, other methods for detecting the lane-marking, such as, for example, detecting edges from the front view image through Canny edge detection and extracting an area corresponding to the lane-marking among the detected edges through Hough transformation, or detects the lane-marking from the front view image through inverse perspective transformation, may be used without departing from the scope of the illustrative examples described.

In operation 240, the lane maintaining apparatus determines whether the vehicle has departed from the current driving lane based on the lane-marking detected in operation 235. For example, the lane maintaining apparatus determines whether the vehicle has departed from the current driving lane based on a change in location and a gradient of the detected lane-marking while a user has no intention of changing lanes.

When it is determined that the vehicle departs from the current driving lane in operation 230 or 240, in operation 250, the lane maintaining apparatus controls a steering of the vehicle or provides notification on a risk of a lane departure to the user. The lane maintaining apparatus controls the steering of the vehicle such that the vehicle travels in the lane in which the vehicle has travelled before departing from the lane, or provides notification on the risk of the lane departure to the user through an image displayed on the display, an alarm sound and/or a vibration, such as a vibration of the steering wheel.

In the aforementioned method, the lane maintaining apparatus uses lighting detection information in a tunnel, thereby robustly performing a lane maintaining function in a dark environment of the tunnel.

FIG. 3 illustrates an example of a method for maintaining a lane, which is performed in a tunnel. The operations in FIG. 3 may be performed in the sequence and manner as shown, although the order of some operations may be changed or some of the operations omitted without departing from the scope of the illustrative examples described. Many of the operations shown in FIG. 3 may be performed in parallel or concurrently. One or more blocks of FIG. 3, and combinations of the blocks, can be implemented by special purpose hardware-based computer that perform the specified functions, or combinations of special purpose hardware and computer instructions. In addition to the description of FIG. 3 below, the descriptions of FIGS. 1A-2 are also applicable to FIG. 3. Thus, the above description may not be repeated here.

Referring to FIG. 3, before a vehicle enters a tunnel, a lane keeping assistance apparatus determines reference information that defines a positional relationship between a current driving lane and a lighting pattern in the tunnel and stores the determined reference information. After the vehicle enters the tunnel, the lane maintaining apparatus performs a lane maintaining function in the tunnel based on the stored reference information and a result of detecting the lane-marking in the tunnel.

In operation 310, the lane maintaining apparatus detects a first lighting pattern in the tunnel from a first front view image captured from the vehicle before the vehicle enters the tunnel. In operation 315, the lane maintaining apparatus determines reference information on a current driving lane based on the first lighting pattern. After the vehicle enters the tunnel, in operation 320, the lane maintaining apparatus detects a second lighting pattern from a second front view image. In operation 325, the lane maintaining apparatus determines whether the vehicle departs from the current driving lane based on the second lighting pattern and the reference information determined in operation 315. Operations 310, 315, 320, and 325 are the similar to operations 215, 220, 225, and 230 of FIG. 2, respectively. The previous descriptions of these operations are applicable here. Thus, the above description may not be repeated.

In operation 330, the lane maintaining apparatus detects a lane-marking from the second front view image. The lane maintaining apparatus detects the lane-marking from the second front view image using at least one of various lane detection methods as described with reference to FIG. 2. The lane maintaining apparatus detects the lane-marking from each of second front view images captured continuously while the vehicle travels in the tunnel.

In operation 335, the lane maintaining apparatus determines whether the result of the lane-marking detection obtained from the second front view image is valid. In an example, the lane maintaining apparatus determines whether the lane-marking detected from the second front view image is valid based on at least one of a luminance level around the vehicle and an image quality of the second front view image. In an example, when at least one of the luminance level in the tunnel and the image quality of the second front view image does not satisfy a threshold, the lane-marking detection result is determined to be invalid. In an example, even when the lane-marking is detected from the second front view image using the aforementioned lane detection method, but when a continuity of the detected lane-marking is relatively low, the lane-marking detection result is determined to be invalid. For example, when a lane marking is unclear, and when the lane-marking is obscured by another vehicle, the lane-marking detection result may be determined to be invalid. In another example, when the continuity of the lane-marking detected from the second front view image, the luminance level in the tunnel, and the image quality of the second front view image satisfy preset references, the lane-marking detection result is determined to be valid.

When it is determined that the lane-marking detection result is valid in operation 335, in operation 340, the lane maintaining apparatus determines whether the vehicle departs from the current driving lane based on the lane-marking detected from the second front view image. When it is determined that the lane-marking detection result is invalid in operation 335, in operation 325, the lane maintaining apparatus determines whether the vehicle departs from the current driving lane based on the second lighting pattern and the reference information. In an example, the lane maintaining apparatus additionally uses the lane-marking detection result obtained from the second front view image to robustly perform the lane maintaining function. When only a portion of the lane-marking is recognized in the second front view image, or when it is determined that the lane-marking detection result is invalid because a lane-marking recognized at a current time and a lane-marking recognized at a previous time do not have a continuity, the lane maintaining apparatus corrects a continuity of a lane-marking based on a result obtained by applying the reference information to the second lighting pattern. When the lane-marking is detected from the second front view image and a reliability of information on the detected lane-marking is relatively low due to a dark environment in the tunnel, the lane maintaining apparatus uses information associated with lightings in the tunnel in addition to the lane-marking detection result, thereby robustly performing the lane maintaining function. When a reliability of a lane-marking detection result obtained from the second front view image is significantly low, the lane maintaining apparatus determines whether the vehicle departs from the current driving lane based on the reference information and the second lighting pattern in operation 325 instead of the lane-marking detection result obtained in operation 330.

When it is determined that the vehicle departs from the current driving lane, the lane maintaining apparatus controls a steering of the vehicle or provide notification on a risk of lane departure to a user in operation 350. Operation 350 is performed similarly to operation 250 of FIG. 2 and thus, repeated description will be omitted.

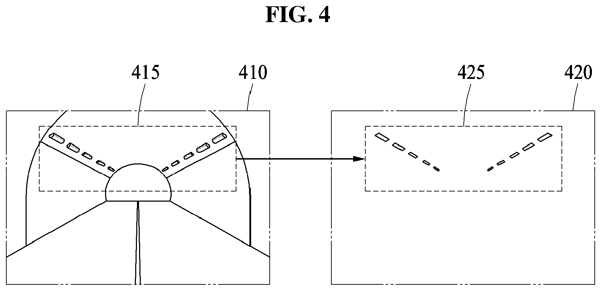

FIG. 4 illustrates an example of detecting a first lighting pattern from a first front view image.

A lane maintaining apparatus continuously receives a front view image captured from a vehicle by a camera. The lane maintaining apparatus detects a lane-marking from the front view image and performs a lane maintaining function based on a result of lane-marking detection. When a presence of a tunnel is recognized, the lane maintaining apparatus detects in-tunnel lightings 415 from a first front view image 410 captured in a vicinity of a tunnel entrance. For example, the lane maintaining apparatus determines whether a vehicle is in the vicinity of the tunnel entrance based on map information and information on a location of the vehicle. In another example, the lane maintaining apparatus determines whether a vehicle is in the vicinity of the tunnel entrance using a neural network based recognizer to which a front view image is input.

The lane maintaining apparatus detects the in-tunnel lightings 415 from the first front view image 410 using an edge detection or neural network based detector and acquires a result image 420 representing a first lighting pattern 425. The lane maintaining apparatus performs the lane maintaining function using at least one of a plurality of lighting arrays included in the first lighting pattern 425.

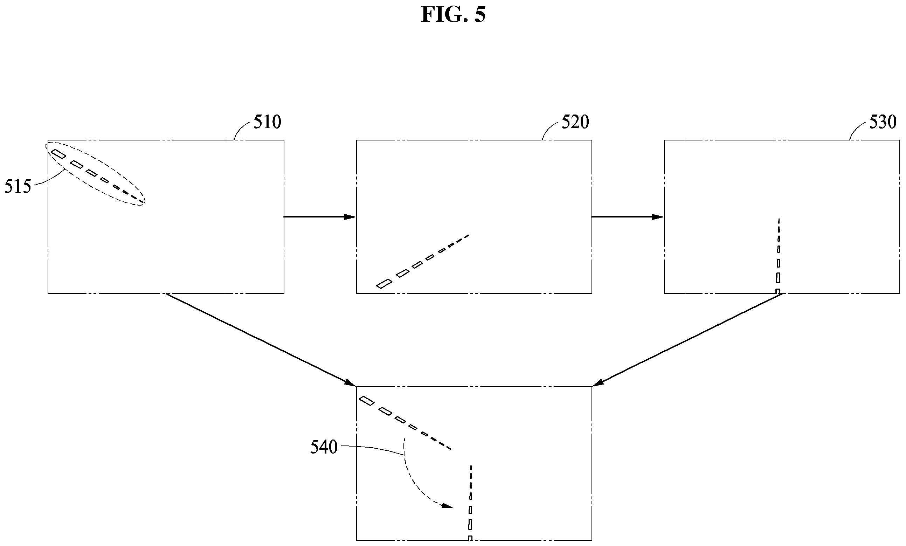

FIG. 5 illustrates an example of a process of determining reference information on a current driving lane based on a first lighting pattern.

When a first lighting pattern is detected from a first front view image captured in a vicinity of a tunnel entrance, a lane maintaining apparatus determines, to be reference information, a rotation angle 540 at which a first lighting pattern 515 represented in a result image 510 rotates to be located at a center of a current driving lane or located in parallel to a lane-marking. For example, a rotation angle such as 120 degrees is determined to be the reference information. The lane maintaining apparatus performs image flipping on the result image 510 based on a horizontal line or a vanishing point and acquires a result image 520 as a result of the image flipping. Also, the lane maintaining apparatus determines a rotation angle at which a first lighting pattern represented in the result image 520 is located at the center of the current driving lane or located in parallel with the lane-marking 530, to be the reference information. The determined reference information is stored to be used for the lane maintaining function after the vehicle enters a tunnel. The rotation angle varies based on a location or a height of a lighting installed in the tunnel. Also, new reference information is determined for each tunnel and a current driving lane each time that the vehicle enters a tunnel.

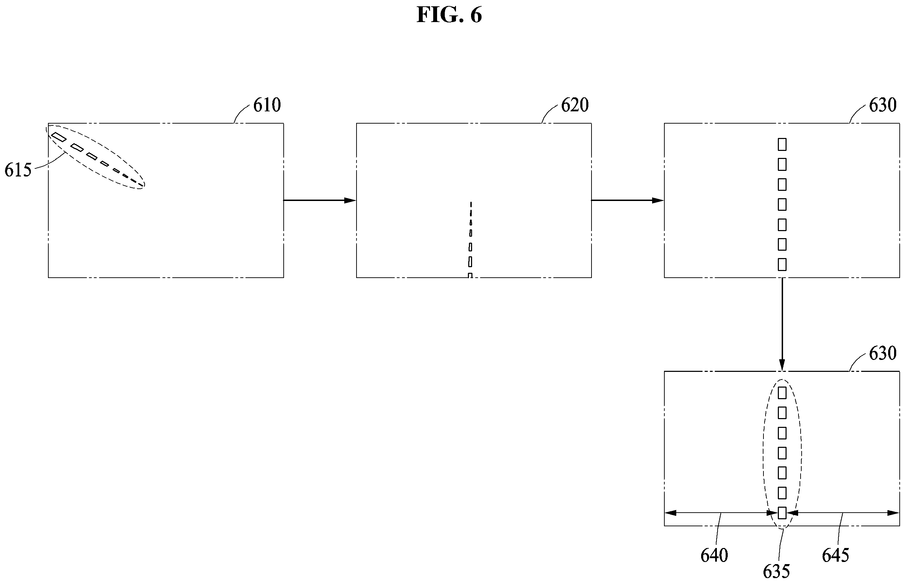

FIGS. 6 through 7B illustrate examples of a process of determining whether a vehicle departs from a current driving lane based on reference information and a second lighting pattern.

A lane maintaining apparatus detects a second lighting pattern from a second front view image captured by a camera after a vehicle enters a tunnel. The lane maintaining apparatus performs a lane maintaining function based on the detected second lighting pattern and reference information determined before the vehicle enters the tunnel. Referring to FIG. 6, a result image 610 represents a second lighting pattern 615 detected from a second front view image. The lane maintaining apparatus acquires a result image 620 by applying the determined reference information to the second lighting pattern 615. When the reference information is, for example, a rotation angle of 120 degrees as described in FIG. 5, the result image 620 is acquired by rotating the second lighting pattern 615 120 degrees about a vanishing point. The lane maintaining apparatus converts the result image 620 into a top view image 630 through, for example, homography transformation and performs the lane maintaining function based on a second lighting pattern 635 represented in the top view image 630. In an example, the lane maintaining apparatus calculates lateral distances 640 and 645 based on the second lighting pattern 635. In an example, the lane maintaining apparatus controls a steering of the vehicle or provides notification on a risk of a lane departure to a user based on the calculated lateral distances 640 and 645. A second lighting pattern is detected from each second front view image captured in the tunnel and a top view image is generated for the corresponding second front view image. The lane maintaining apparatus detects a change in position of a second lighting pattern represented in the top view image and determines whether the vehicle is to depart from a current driving lane.

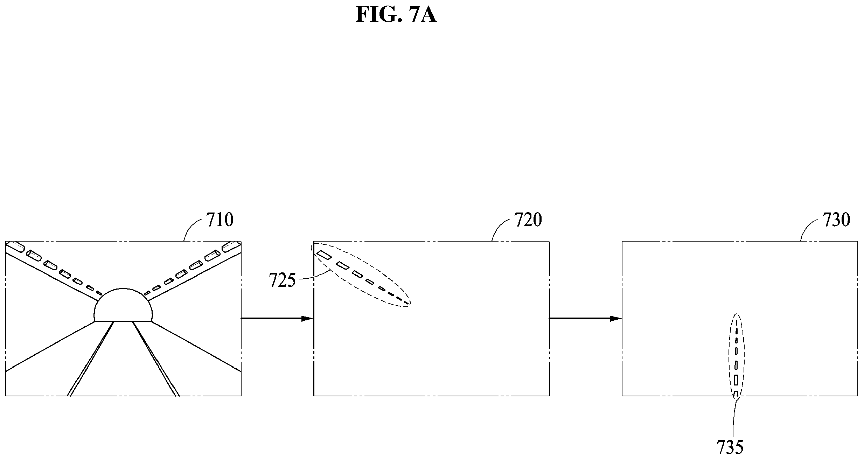

FIG. 7A illustrates a process of determining, by a lane maintaining apparatus, whether a vehicle departs from a driving lane when the vehicle travels in a tunnel without departing from a lane in which the vehicle has traveled. Referring to FIG. 7A, the lane maintaining apparatus detects a second lighting pattern 725 from a second front view image 710 and acquires a result image 720 representing the second lighting pattern 725. The lane maintaining apparatus determines whether the vehicle departs from the driving lane based on a result image 730 acquired by applying reference information determined before the vehicle enters the tunnel to the second lighting pattern 725. In the result image 730, the second lighting pattern 735 to which the reference information is applied is located at a center of a current driving lane. Thus, the lane maintaining apparatus is informed that the vehicle is travelling in the lane in which the vehicle has traveled. In this example, the lane maintaining apparatus does not perform a control to correct the steering or inform the user.

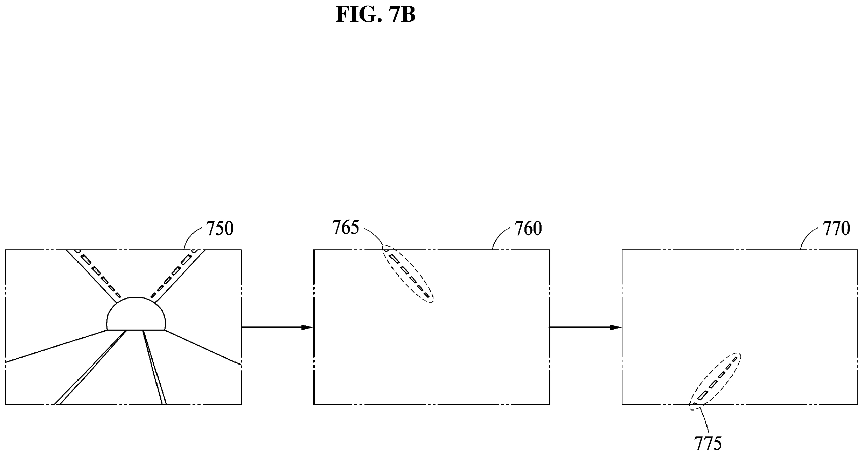

FIG. 7B illustrates a process of determining, by a lane maintaining apparatus, whether a vehicle departs from a driving lane when the vehicle departs from a lane in which the vehicle has traveled in a tunnel. Referring to FIG. 7B, the lane maintaining apparatus detects a second lighting pattern 765 from a second front view image 750 and acquires a result image 760 representing the second lighting pattern 765. The lane maintaining apparatus acquires a result image 770 by applying reference information to the second lighting pattern 765 and determines that the vehicle has departed or is about to depart from the driving lane based on a changed location of the second lighting pattern 765 in the result image 770 in comparison to a location, for example, of the second lighting pattern 735 of FIG. 7A, in a normal situation. In this example, the lane maintaining apparatus controls a steering of the vehicle or provides notification on a risk of a lane departure to the user in order to maintain the driving lane. In an example, such lane maintaining function is performed when the user has no intention of a lane change, for example, when the user does not operate a turn indicator.

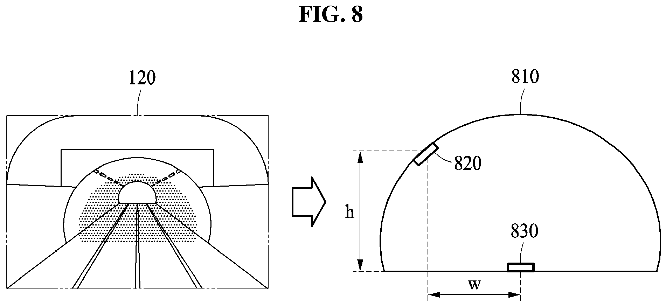

FIG. 8 illustrates an example of a process of determining reference information on a current driving lane based on a first lighting pattern.

FIG. 8 illustrates a first front view image, for example, the front view image 120 captured from a vehicle before entering a tunnel. A lane maintaining apparatus detects a first lighting pattern arranged in the tunnel and a lane-marking on a road in a vicinity of a tunnel entrance and determines positional relationship information of the first lighting pattern and the lane-marking. As illustrated in a cross-sectional view of a tunnel 810 in a right portion of FIG. 8, the positional relationship information includes information associated with a difference in height h on a vertical axis between a lighting 820 and a lane-marking 830 and a difference in distance w on a horizontal axis between the lighting 820 and the lane-marking 830. In an example, the positional relationship information is defined based on the information associated with the difference in height h and the difference in distance w, or information on a ratio between the difference in height h and the difference in distance w. In another example, the positional relationship information is defined based on a conversion matrix for expressing a corresponding relationship between a location of the lighting 820 and a location of the lane-marking 830.

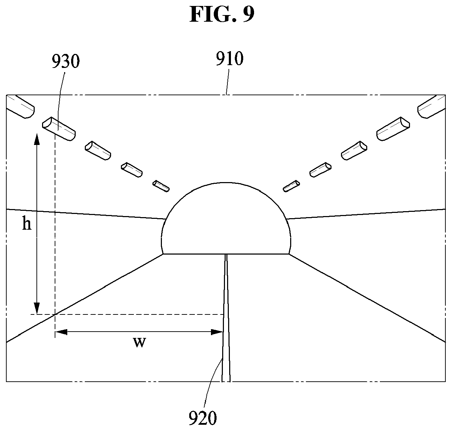

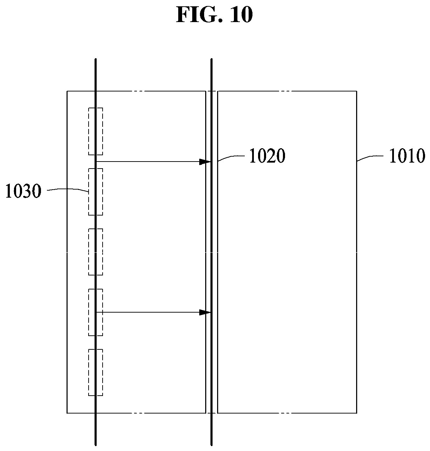

FIGS. 9 and 10 illustrate examples of a process of determining whether a vehicle departs from a current driving lane based on reference information and a second lighting pattern.

FIG. 9 illustrates a second front view image 910 captured in a tunnel. A lane maintaining apparatus detects a second lighting pattern 930 from the second front view image 910 and estimates a location of a lane-marking 920 in the tunnel from the second lighting pattern 930 based on positional relationship information determined before the vehicle entered the tunnel. For example, the lane maintaining apparatus estimates the location of the lane-marking 920 from a location of the second lighting pattern 930 based on a difference in height h and a difference in distance w between a lighting and a lane-marking, or a conversion matrix that defines a corresponding relationship between a location of the lighting and a location of the lane-marking as described with reference to FIG. 8.

FIG. 10 is a bird's-eye view illustrating a road 1010 with a lane-marking 1020 estimated based on a location of a second lighting pattern 1030. In an example, a lane maintaining apparatus generates a bird's-eye view in a form viewed from above by applying inverse perspective mapping (IPM) to a lane-marking detected from a second front view image. The IPM is a scheme of removing a distance effect from an image and converting positional information of an image plane into positional information of the world coordinate system. The lane maintaining apparatus estimates a location of the lane-marking 1020 from a location of the second lighting pattern 1030 in a tunnel based on positional relationship information of a first lighting pattern and a lane-marking determined before the vehicle enters the tunnel. The lane maintaining apparatus determines whether the vehicle departs from a current driving lane based on the estimated location of the lane-marking 1020. When it is determined that the vehicle departs from the current driving lane, the lane maintaining apparatus controls a steering of the vehicle or provides notification on a risk of a lane departure to a user. In an example, the lane maintaining apparatus predicts a shape and a path of the road 1010 in the tunnel based on a form of arrangement of the second lighting pattern 1030. When it is predicted that a road is curved, the lane maintaining apparatus reduces a speed of the vehicle or provides notification on a change prediction result of the road in a path to the user.

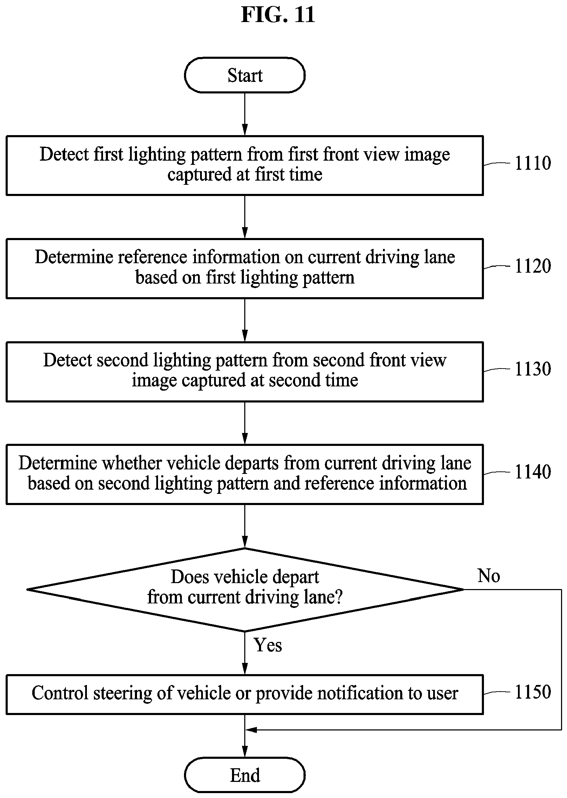

FIG. 11 illustrates an example of a method for maintaining a lane. The operations in FIG. 11 may be performed in the sequence and manner as shown, although the order of some operations may be changed or some of the operations omitted without departing from the scope of the illustrative examples described. Many of the operations shown in FIG. 11 may be performed in parallel or concurrently. One or more blocks of FIG. 11, and combinations of the blocks, can be implemented by special purpose hardware-based computer that perform the specified functions, or combinations of special purpose hardware and computer instructions. In addition to the description of FIG. 11 below, the descriptions of FIGS. 1A-10 are also applicable to FIG. 11. Thus, the above description may not be repeated here.

Referring to FIG. 11, in operation 1110, a lane maintaining apparatus detects a first lighting pattern from a first front view image captured from a vehicle at a first time. In operation 1120, the lane maintaining apparatus determines reference information on a current driving lane based on the first lighting pattern. In an example, the lane maintaining apparatus determines angle information that defines a positional relationship between the first lighting pattern and the current driving lane to be the reference information. In an example, the lane maintaining apparatus determines, to be the reference information, angle information used to rotate the first lighting pattern about a vanishing point estimated in the first front view image such that at least a portion of the first lighting pattern is located at a center of the current driving lane.

In operation 1130, the lane maintaining apparatus detects a second lighting pattern from a second front view image captured from the vehicle at a second time, the second time being later than the first time. In operation 1140, the lane maintaining apparatus determines whether the vehicle departs from the current driving lane based on the detected second lighting pattern and the reference information determined in operation 1120. When it is determined that the vehicle departs from the current driving lane, in operation 1150, the lane maintaining apparatus controls a steering of the vehicle or provides notification on a risk of a lane departure to a user.

The first lighting pattern and the second lighting pattern are, for example, patterns of lightings installed in the tunnel or patterns of streetlamps on a side of a road on which the vehicle is travelling. The lane maintaining apparatus not only performs a lane maintaining function in the tunnel using the patterns of the lightings in the tunnel as described with reference to FIGS. 2 and 3 but also performs the lane maintaining function in a night driving environment based on an arrangement of street lighting. As such, the lane maintaining apparatus robustly performs the lane maintaining function not only in the tunnel but also in a dark driving environment.

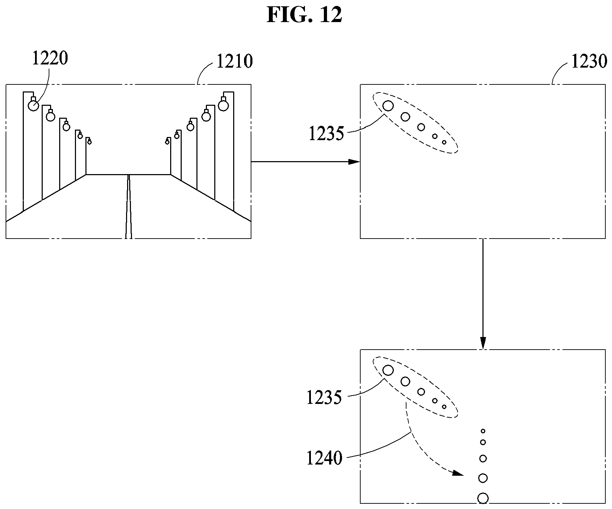

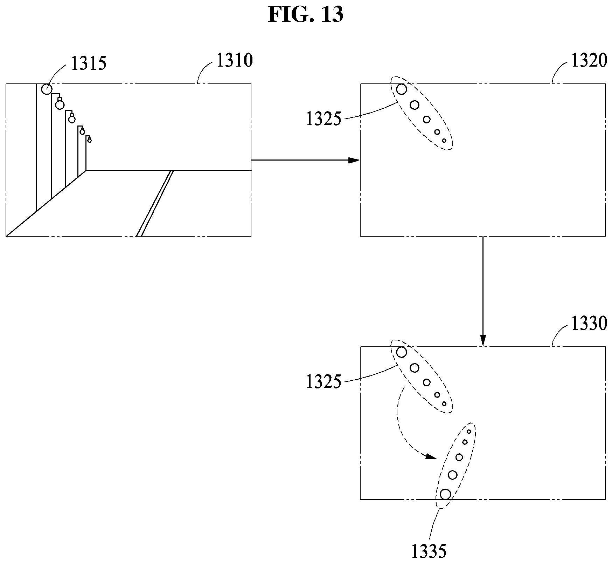

FIGS. 12 and 13 illustrate examples of a method for maintaining a lane that is performed in a night driving environment.

A lane maintaining apparatus performs a lane maintaining function based on lighting located not only in a tunnel but also along a typical road. FIG. 12 illustrates a first front view image 1210 representing streetlamps 1220 arranged on a side of a road in a night driving environment. The lane maintaining apparatus detects a first lighting pattern 1235 of the streetlamps 1220 represented in the first front view image 1210 and acquires a result image 1230 representing a detection result of the first lighting pattern 1235. Similarly to the example of FIG. 5, the lane maintaining apparatus determines a rotation angle 1240 at which the first lighting pattern 1235 rotates to be located at a center of a current driving lane or located in parallel with a lane-marking, to be reference information.

The determined reference information is stored and used to perform a lane maintaining function based on a second lighting pattern detected from a second front view image captured after the first front view image 1210. FIG. 13 illustrates an example of determining whether a vehicle departs from a current driving lane based on a second lighting pattern and reference information. Referring to FIG. 13, a second front view image 1310 is acquired at a second time. From the second front view image 1310, a second lighting pattern 1325 corresponding to an arrangement pattern of streetlamps 1315 is detected and a result image 1320 representing the second lighting pattern 1325 is acquired. The lane maintaining apparatus acquires a result image 1330 by applying, to the second lighting pattern 1325, the reference information determined in the example of FIG. 12. The lane maintaining apparatus determines that the vehicle has departed or is about to depart from a driving lane based on a changed location of the second lighting pattern 1335 represented in the result image 1330 in comparison to a location of the second lighting pattern in a normal situation. In this example, the lane maintaining apparatus controls a steering of the vehicle or provides notification on a risk of a lane departure to a user.

In certain conditions, such as a low luminance level or an unclear or obscured lane-marking, a validity of a lane-marking detection of a second front view image decreases. The lane maintaining apparatus uses lighting pattern information of streetlamps as the reference information in addition to the lane-marking detection result, thereby robustly performing the lane maintaining function in a dark driving environment of a typical road.

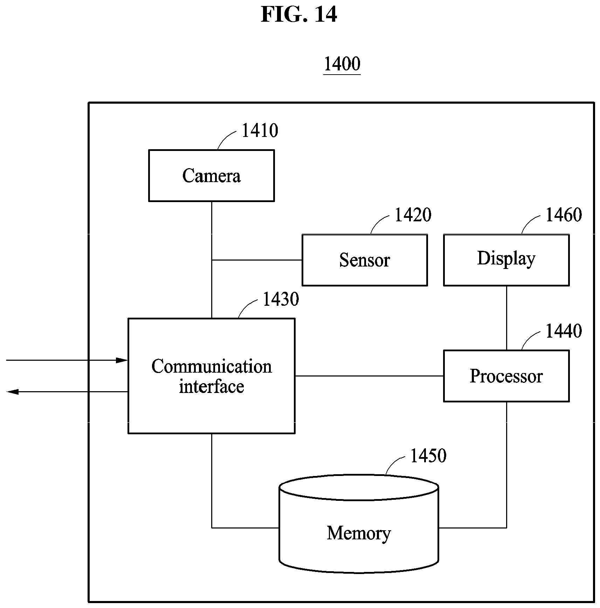

FIG. 14 illustrates an example of an apparatus for maintaining a lane.

Referring to FIG. 14, a lane maintaining apparatus 1400 recognizes a lane-marking represented in a front view image captured from a vehicle and performs a lane maintaining function. The lane maintaining apparatus 1400 uses lighting pattern information indicated in the front view image to robustly perform the lane maintaining function. For example, by using an in-tunnel lighting pattern, the lane maintaining apparatus 1400 effectively performs the lane maintaining function in a dark environment of an inside of a tunnel.

The lane maintaining apparatus 1400 corresponds to the lane maintaining apparatus described in the present disclosure. In an example, the lane maintaining apparatus 1400 operates in an autonomous vehicle that travels in an autonomous mode in accordance with a recognized driving environment. The autonomous vehicle recognizes a driving environment and determines an autonomous driving route appropriate for the driving environment. The autonomous vehicle controls internal and external elements of the autonomous vehicle to follow the determined autonomous driving route. The lane maintaining apparatus 1400 is used for controlling the autonomous vehicle to maintain a driving lane.

In an example, the lane maintaining apparatus 1400 is included in a vehicular guidance apparatus, such as, for example, a cruise control system, an adaptive cruise control system, a lane keeping assist system, and a lane departure warning system. In an example, lane maintaining apparatus 1400 is applicable to a robot requiring a positioning operation.

In an example, the lane maintaining apparatus 1400 is included in various types of apparatuses in a vehicle. In an example, the lane maintaining apparatus 1400 operates in an electronic device, such as, for example, an intelligent agent, a mobile phone, a cellular phone, a smartphone, a wearable device, a server, a computer, a laptop computer, a notebook, a subnotebook, a netbook, a tablet PC, and a personal digital assistant (PDA), a phablet, an ultra-mobile PC (UMPC), a mobile internet device (MID), an enterprise digital assistant (EDA), a digital camera, a digital video camera, a portable game console, an MP3 player, a portable/personal multimedia player (PMP), a handheld e-book, an ultra mobile personal computer (UMPC), a portable lab-top PC, a global positioning system (GPS) navigation, a personal navigation device, portable navigation device (PND), a handheld game console, an e-book, a high definition television (HDTV), a smart appliance, communication systems, image processing systems, graphics processing systems, various Internet of Things (IoT) devices that are controlled through a network, other consumer electronics/information technology(CE/IT) device, or any other device capable of wireless communication or network communication consistent with that disclosed herein. However, the electronic device is not limited to the examples described in the forgoing. In an example, the lane maintaining apparatus 1400 is located outside a vehicle. The lane maintaining apparatus 1400 may be included in a device such as a computer, a server, and a mobile terminal configured to wirelessly communicate with a vehicle.

The lane maintaining apparatus 1400 includes a camera 1410, a sensor 1420, a communication interface 1430, a processor 1440, a memory 1450, and a display 1460. The camera 1410 captures a front view from a vehicle and acquires a front view image. The front view image is a still image or a moving image. The sensor 1420 includes at least one sensor to sense information used for performing the lane maintaining function. The sensor 1420 includes, for example, a GPS sensor configured to sense location information of the vehicle, a luminance sensor configured to measure an ambient luminance level of the vehicle, and a light detection and ranging (LiDAR) and a radio detection and ranging (RADAR) that are used to measure a distance from an object. However, examples of the sensor 1420 are not limited to the example sensors described in the foregoing and other sensors may be used without departing from the scope of the illustrative examples described.

The processor 1440 executes functions and instructions to be executed in the lane maintaining apparatus 1400. The processor 1440 processes instructions or program execution codes stored in the memory 1450 or a separate storage (not shown). The processor 1440 is a hardware-implemented data processing device having a circuit that is physically structured to execute desired operations. Further description of the processor 1440 is provided below.

The processor 1440 performs at least one of the operations described with reference to FIGS. 1A through 13. For example, the processor 1440 detects a first lighting pattern from a first front view image acquired from a vehicle at a first time and determines reference information on a current driving lane of the vehicle based on the detected first lighting pattern. The processor 1440 determines whether a tunnel is present based on information on a location of the vehicle and map information indicating a location of the tunnel. In response to a determination that the tunnel is present, the processor 1440 detect, as the first lighting pattern, a pattern of a lighting in the tunnel from the first front view image. The processor 1440 determines angle information that defines a positional relationship between the first lighting pattern and the current driving lane, to be reference information. In an example, angle information used to rotate the first lighting pattern about a vanishing point estimated in the first front view image such that at least a portion of the first lighting pattern is located at a center of the current driving lane is determined to be the reference information.

The processor 1440 detects a second lighting pattern from a second front view image acquired from the vehicle at a second time and determines whether the vehicle departs from the current driving lane based on the detected second lighting pattern and the reference information. The processor 1440 detects a second lighting pattern in the tunnel from a second front view image captured after the vehicle enters the tunnel and determines whether the vehicle departs from the current driving lane by analyzing a result obtained by applying the reference information to the second lighting pattern. When it is determined that the vehicle departs from the current driving lane, the processor 1440 generates a control signal for controlling a steering of the vehicle or generates a control signal for providing notification on a risk of a lane departure through a vibration, a sound, or on a display 1460. In an example, the processor 1440 displays the notification on a risk of a lane departure on a display 1460 included in the vehicle, plays a warning auditory information indicating a risk of a lane departure using an audio system in the vehicle, provides the warning using tactile information delivered by a steering handle of the vehicle, or a vibration of a passenger seat.

In an example, the display 1460 is a physical structure that includes one or more hardware components that provide the ability to render a user interface and/or receive user input. In an example, the display 1460 can be embedded in the lane maintaining apparatus 1400. In an example, the display 1460 is an external peripheral device that may be attached to and detached from the lane maintaining apparatus 1400. The display 1460 may be a single-screen or a multi-screen display.

In an example, the processor 1440 projects the lane or a notification on a risk of a lane departure to a front glass or a separate screen of the vehicle using a head-up display (HUD) 1460. In an example, the processor 1440 may project the notification on a risk of a lane departure to a wind shield glass or a separate screen. However, the displaying of the object in the image is not limited to the example described above, and any other instrument cluster, vehicular infotainment system, screen in the vehicle, or display panel in the vehicle may perform the display function. Other displays, such as, for example, smart phone and eye glass display (EGD) that are operatively connected to the lane maintaining apparatus 1400 may be used without departing from the scope of the illustrative examples described.

The memory 1450 stores information used for performing a lane maintaining function and instructions to be executed by the processor 1440. The memory 1450 includes a non-transitory computer-readable storage medium or a computer-readable storage device. The memory 1450 includes, for example, a random access memory (RAM), a dynamic RAM (DRAM), a static RAM (SRAM), a flash memory, and other types of nonvolatile memories well-known in the field of technology to which the present disclosure pertains. Further description of the memory 1450 is provided below.

The communication interface 1430 connects the camera 1410, the sensor 1420, the processor 1440, the display 1460, and the memory 1450 to perform data transmission and reception. Also, the communication interface 1430 communicates with an external device through a wired or wireless network. The communication interface 1430 includes, for example, an internal bus, an Ethernet card, an optical transceiver, a radio frequency transceiver, and other network interfaces configured to transmit and receive information.

The lane maintaining apparatus 1400, and other apparatus, units, modules, devices, and other components described are implemented by hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In an example, the instructions or software includes at least one of an applet, a dynamic link library (DLL), middleware, firmware, a device driver, an application program storing the method of preventing the collision. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and providing the instructions or software and any associated data, data files, and data structures to a processor or computer so that the processor or computer can execute the instructions. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A lane maintaining method comprising:
determining a presence of a tunnel in front of a vehicle;
detecting a first lighting pattern in the tunnel from a first front view image acquired before the vehicle enters the tunnel, in response to the tunnel being present;
determining reference information on a current driving lane of the vehicle based on the first lighting pattern;
detecting a second lighting pattern in the tunnel from a second front view image acquired after the vehicle enters the tunnel; and
determining whether the vehicle departs from the current driving lane based on the second lighting pattern and the reference information.

2. The lane maintaining method of claim 1, wherein the determining of the reference information comprises determining angle information regarding a positional relationship between the first lighting pattern and the current driving lane to be the reference information.

3. The lane maintaining method of claim 2, wherein the determining of the angle information comprises determining an angle formed in rotating the first lighting pattern about a vanishing point estimated in the first front view image such that at least a portion of the first lighting pattern is located at a center of the current driving lane.

4. The lane maintaining method of claim 2 or 3, wherein the determining of whether the vehicle departs from the current driving lane comprises:
rotating the second lighting pattern based on the angle information; and
determining whether the vehicle departs from the current driving lane based on a positional relationship between a center of the current driving lane and a location of the rotated second lighting pattern and /or wherein the determining of whether the vehicle departs from the current driving lane further comprises:
converting the rotated second lighting pattern into a top view image; and
determining whether the vehicle departs from the current driving lane based on the second lighting pattern represented in the top view image.

5. The lane maintaining method of any one of the preceding claims, further comprising:
controlling a steering of the vehicle, in response to a determination that the vehicle departs from the current driving lane.

6. The lane maintaining method of any one of the preceding claims, wherein the determining of the reference information comprises:
detecting a lane-marking of the current driving lane from the first front view image; and
determining information on a positional relationship between the detected first lighting pattern and the detected lane-marking to be the reference information,.

7. The lane maintaining method of any one of the preceding claims, wherein the determining of the presence of the tunnel comprises determining that the tunnel is present, in response to the tunnel being recognized in a front view image acquired from the vehicle.

8. The lane maintaining method of any one of the preceding claims, wherein the determining of the presence of the tunnel comprises determining that the tunnel is present, in response to a lighting arranged in the tunnel being recognized in a front view image acquired from the vehicle.

9. The lane maintaining method of any one of the preceding claims, wherein the determining of the presence of the tunnel comprises determining whether the tunnel is present based on a location of the vehicle measured using a global positioning system (GPS) sensor and map information indicating a location of the tunnel.

10. The lane maintaining method of any one of the preceding claims, wherein the first lighting pattern and the second lighting pattern are acquired from the vehicle.

11. A non-transitory computer-readable storage medium storing instructions that, when executed by a processor, cause the processor to perform the method of any one of the preceding claims.

12. A lane maintaining apparatus comprising:
a camera configured to capture a front view image from a vehicle; and
a processor is configured to:
detect a first lighting pattern from a first front view image acquired from the vehicle at a first time;
determine reference information on the current driving lane of the vehicle based on the first lighting pattern;
detect a second lighting pattern from a second front view image acquired from the vehicle at a second time; and
determine whether the vehicle departs from the current driving lane based on the second lighting pattern and the reference information.

13. The lane maintaining apparatus of claim 18, wherein the processor is further configured to determine angle information regarding a positional relationship between the first lighting pattern and the current driving lane to be the reference information and/or, wherein the processor is further configured to determine an angle used to rotate the first lighting pattern about an vanishing point estimated in the first front view image such that at least a portion of the first lighting pattern is located at a center of the current driving lane.

14. The lane maintaining apparatus of claim 12 or 13, wherein the processor is further configured to:
determine a presence of a tunnel based on any one or any combination of map information indicating a location of the tunnel and a location of the vehicle, or the first front view image; and
detect, as the first lighting pattern, a pattern of a lighting in the tunnel from the first front view image, in response to determining that the tunnel is present.

15. The lane maintaining apparatus of claim 12, 13 or 14, wherein the first lighting pattern and the second lighting pattern are patterns of lightings in a tunnel and/or wherein the first lighting pattern and the second lighting pattern are patterns of streetlamps located on a side of a road on which the vehicle is travelling.
